Europäisches Patentamt

European Patent Office

Office européen des brevets

(19)

(11)  **EP 0 926 883 B1**

(12)  **EUROPEAN PATENT SPECIFICATION**

(45) Date of publication and mention
of the grant of the patent:
**25.08.2004  Bulletin 2004/35**

(51) Int Cl.⁷: **H04N 1/41**, H04N 7/30

(21) Application number: **99200315.2**

(22) Date of filing: **30.08.1991**

(54) **Image processing method and apparatus**

Verfahren und Vorrichtung zur Bildverarbeitung

Procédé et appareil de traitement d'image

(84) Designated Contracting States:
**DE FR GB**

(30) Priority: **04.09.1990 JP 23498590**
**04.09.1990 JP 23498690**
**05.11.1990 JP 29707390**

(43) Date of publication of application:
**30.06.1999  Bulletin 1999/26**

(62) Document number(s) of the earlier application(s) in
accordance with Art. 76 EPC:
**91307986.9 / 0 474 444**

(73) Proprietor: **CANON KABUSHIKI KAISHA**
**Tokyo (JP)**

(72) Inventor: **Yamagami, Taku**
**Ohta-ku, Tokyo (JP)**

(74) Representative:
**Beresford, Keith Denis Lewis et al**
**BERESFORD & Co.**
**16 High Holborn**
**London WC1V 6BX (GB)**

(56) References cited:
**EP-A- 0 309 280          EP-A- 0 336 317**
**EP-A- 0 380 081          US-A- 4 774 587**
**US-A- 4 819 079          US-A- 4 858 028**
**US-A- 4 894 713**

• **PATENT ABSTRACTS OF JAPAN vol. 014, no.**
**413 (E-0974), 6 September 1990 (1990-09-06) &**
**JP 02 156789 A (FUJI PHOTO FILM CO LTD), 15**
**June 1990 (1990-06-15)**

**Description**

The present invention relates to the encoding of image data to generate compound image data for storage. The invention may be applied for example, to a video signal recording apparatus for recording a video signal in such a manner that the video signal is compressed before it is recorded.

Hitherto, an Adaptive Discrete Cosine Transform, (hereinafter abbreviated to "ADCT") method, for example, disclosed as in Document 1 (ISO/JTC1/SC2/WG8N800) has been known as an image compression method. According to the above-described method, a function is realized which is capable of, regardless of the image content, compressing an image signal into a predetermined amount of encoded data by a repetition process in which plural trial and error operations are performed. Then, the adjustment function thus-realized will now be described.

According to the above-described method, the amount of data is, as disclosed in Document 1, converged by using a Newton Raphson Method or a method disclosed in Document 2 ("Method of Controlling Code Amount in DCT Coding", 1989, Autumn National Conference of the Electronic Information Society, p.p.45, Exposition No. D45, Pre-Exposition Theses, disclosed by a group including Nemoto). Furthermore, the data amount has been desired to be converged at furthermore high speed. For example, according to Document 2, two or three repetitions will cause an effect to be obtained in that the data amount can be compressed to a desired ratio while revealing an effect of reduction ratio of errors which is smaller than ± 5%.

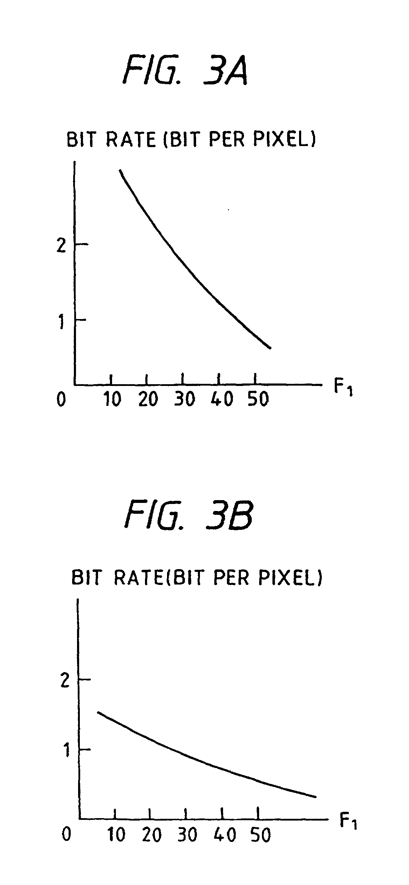

According to the ADCT method, the compression ratio (that is, the amount of encoded data) can be controlled by using parameter F for quantizing image data. Figs. 3A and 3B illustrate the relationship between quantization parameter F and amounts of encoded data. As shown in Fig. 3, the compression ratio is a monotonically decreasing function of F. Figs. 3A and 3B illustrate the relationship between F of various images and compression ratios. As can be seen from Figs. 3A and 3B, although the relationship between F and the compression ratio depends upon the content of the image, the compression ratio necessarily becomes a monotonically decreasing function. Therefore, by performing plural times of trial and error operations while adjusting F, image data can be converged to a desired compression ratio (amount of encoded data).

As hardware capable of, at high speed, performing DCT operation required to transform the frequency in accordance with the above-described ADCT method, A121 manufactured by INMOS or the like has been available. The IC employed in A121 is capable of executing the DCT operation for one frame at about 30 milisec. Assuming that operations (for example, zigzag scanning and Huffman coding) except for the DCT can be subjected to a parallel process, it takes 30 milisec or longer time to perform one trial-and-error operation (that is, the compression ratio is obtained by performing the compression while giving F of a certain value). In a case where an image taken by the CCD of an electronic still camera is compressed by the ADCT method before it is recorded to a magnetic disk, a time about 40 milisec is actually required because the time to perform recording to the magnetic disk is furthermore taken.

In order to record a predetermined number of images, the amount of encoded data must be converged by plural times of repetition operations as described above. Assuming that three times of trial-and-error operations must be performed to converge the amount of encoded data, only about 8 images can be recorded in one second because a time of about 120 milisec is taken. Therefore, satisfactory continuous photographing performance for an electronic still camera cannot be realized as yet.

US 4,819,079 discloses an apparatus for data compression, in which a code of variable code length, for example modified Huffman code, is converted into a code of constant length. The storage of the code data is controlled to cause the memory device to store each set or group of code data immediately following the code data which have already been stored there, to permit continuous code data storage without a break and thus at high speed. The code data may first be stored in a separate memory device, in sets of variable length.

EP-A-0,380,081 discloses an encoder which encodes input data into codes and outputs the codes. Quantities of the codes which are outputted from the encoder during respective first predetermined periods are predicted. The predicted amounts of the output codes are added to derive a sum of the predicted amounts of the output codes which is generated during each second predetermined period longer than each of the first periods. An actual amount of the output codes from the encoder is controlled in accordance with the derived sum. Differences between the predicted amounts of the output codes and the actual amounts of the output codes which are generated during the respective first periods are sequentially generated. The differences are accumulated into an accumulated value. The actual amount of the output codes from the encoder is controlled in accordance with the accumulated value. The actual amount of the codes which are outputted from the encoder during each second period can be held equal to or smaller than a predetermined amount.

The present invention provides an image processing apparatus as set out in claim 1.

The present invention also provides a digital camera as set out in claim 9.

The present invention also provides an image processing method as set out in claim 11.

Optional features are set out in the other claims.

An embodiment of the present invention provides an image processing apparatus capable of easily controlling the memory capacity.

In the drawings:

Fig. 1 is a flow chart which illustrates the operation of a first embodiment of the present invention;
Fig. 2 is a block diagram which illustrates the first embodiment of the present invention;
Figs. 3A and 3B respectively illustrate the relationship between parameter F and the amounts of compression encoded data;
Fig. 4 illustrates the structure of a compression encoding portion 5;
Figs. 5A and 5B respectively are flow charts which illustrate a third embodiment of the present invention;
Figs. 6A and 6B are flow charts which illustrate the operation of a fifth embodiment of the present invention; and
Fig. 7 is a block diagram which illustrates the structure of the fifth embodiment of the present invention.

[First Embodiment]

A digital camera according to the first embodiment is constituted as follows: a repetition process for converging the amount of encoded data is usually performed in a single photographing mode so as to perform so-called fixed length coding (hereinafter abbreviated to "FLC") while controlling the amount of encoded data. In a case where a user has selected a mode in which a plurality of image pictures are continuously recorded in response to a single depression of a button, the above-described repetition operation is not performed at the time of the photographing operation, but so-called variable length coding (hereinafter abbreviated to "VLC") in which the value of quantization parameter F is fixed is performed. As a result, the time taken to perform the coding process can be shortened for the purpose of increasing the number of images which can be continuously taken in a time unit. Furthermore, at the moment at which the above-described continuous photographing operation has been completed, the image recorded in accordance with VLC is temporarily decoded and is again encoded in accordance with FLC so that a predetermined number of images which can be recorded on a recording medium having the same is secured.

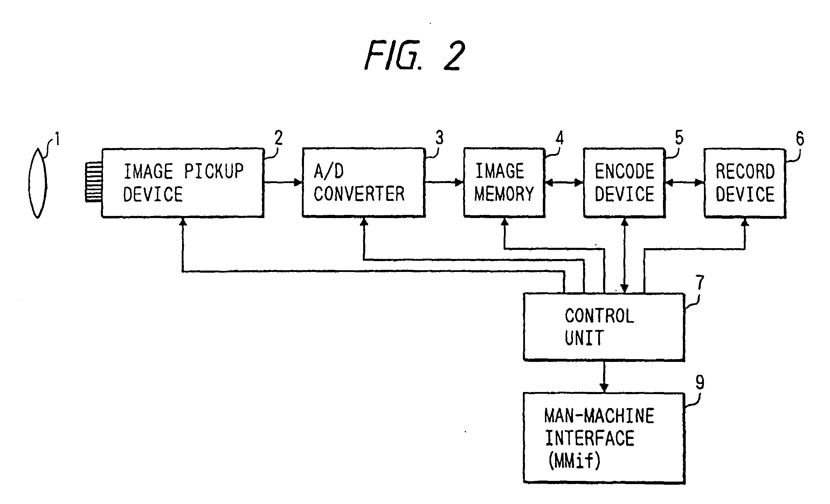

Fig. 2 illustrates an embodiment of the present invention, where portions of the camera which are not related to the present invention, for example, the diaphragm, the shutter and the like are omitted. Referring to Fig. 2, an optical image received by a lens 1 is converted into a video electric signal by an image pickup device 2, for example, a CCD (Charge Coupled Device). The image pickup device 2 registers charges, which correspond to the optical images of the subject and reads the video signal in response to a control signal supplied from a control unit 7.

The video signal thus-read is converted into a digital signal by an A/D converter 3. A video signal processing means is disposed between the image pickup device 2 and the A/D converter 3 although omitted from illustration so that the $\gamma$-correction process, the formation and separation of the color signal, the white balance process, the conversion into $\gamma$-dicolor difference are performed.

The video signal converted into the digital signal is registered in an image memory 4.

An encode device 5 encodes image data read out from the image memory 4 in accordance with the above-described ADCT method so as to transmit the image data to a record device 6. The encode device 5 further possesses a function of counting the code data quantity and a function of decoding single encoded data. The counted amount of encoded data can be read out by a control unit 7.

The control unit 7 unifies the functions of the apparatus and controls the functions of the overall system. That is, the control unit 7 controls a sequential operations of the corresponding units such as the image pickup operation, registration and compression of data and recording medium recording. The control unit 7 further performs the file administration. An MMif 9 is an man-machine interface including a monitor for displaying the available quantity of the memory, the number of the recorded images, the number of the recordable images and the like, a release button and a variable operation members.

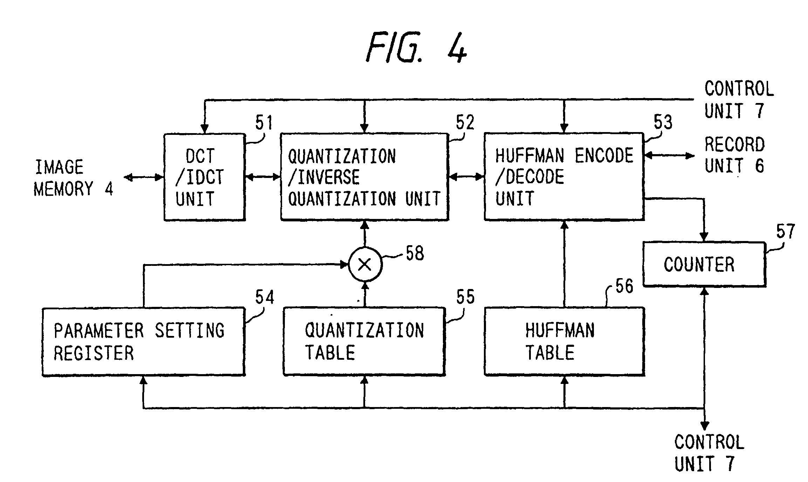

Then, the structure of the encode device 5 will now be described with reference to Fig. 4.

Referring to Fig. 4, reference numeral 51 represents a DCT/IDCT unit for performing discrete cosine transform and inverse discrete cosine transform operations. Reference numeral 52 represents a quantization/inverse quantization unit for performing the quantization and the inverse quantization of data in accordance with a quantization parameter set by a quantization table 55. Reference numeral 53 represents a Huffman encode/decode unit for performing encoding/decoding in accordance with a parameter supplied from a Huffman table 56.

Reference numeral 54 represents a parameter setting register for registering data transmitted from the control unit 7 for the purpose of changing the quantization parameter stored in the quantization table 55, the data thus-registered being then transmitted by the parameter setting register 54 to a multiplier 58. Reference numeral 57 represents a counter for counting the amount of encoded data transmitted from the Huffman encode/decode unit 53. The control unit 7 calculates data to be set for the parameter setting register 54 in accordance with the count value made by the counter 57.

The above-described units described with reference to Fig. 4 are controlled by the control unit 7. At the time of the encode operation, video data transmitted from the image memory 4 is discrete-cosine-converted by the DCT/IDCT 51, quantized by the quantization/inverse quantization unit 52 and Huffman-encoded by the Huffman encode/decode unit 53 before it is stored in the record device 6. Furthermore, in order to again perform encoding, encoded data stored in the record unit 6 is subjected to Huffman decoding, the inverse-quantization and the inverse DCT in the inverse sequential order to the above-described processes so that obtained image data is stored in the image memory 4.

In a case where an ordinary record mode has been instructed by an operator through a mode switch provided in an operation unit (omitted from illustration), the control unit 7 performs recording by the following procedure.

When the release button is depressed, the control portion performs focusing and operates the diaphragm and the shutter so as to expose the image pickup device 2. As a result, image information is fetched by the image memory 4. The control unit 7 transmits the quantization parameter F to the encode device 5 so that image data stored in the image memory 4 is compressed as well as the amount of encoded data is counted. At this time, the encode device 5 does not transmit code data but the same counts the amount of encoded data for one frame.

The above-described operations are performed while changing F until a desired amount of encoded data can be obtained so that a plurality of trial-and-error operations are performed.

At the time when F (hereinafter designated by symbol "Fa"), which enables a desired amount of encoded data to be generated, is obtained, the control unit 7 again supplies the parameter Fa to the encode device 5 as well as instructs the record device 6 to transmit code data. The control unit 7 instructs the record device 6 to receive/record the code data.

As a result of the above-described operations, compression codes, which have been subjected to fixed length coding is recorded to the recording medium (for example, in IC card, a magnetic disk, an optomagnetic disk or the like) of the record device 6.

In a case where a user instructs a continuous recording mode through the mode switch provided in the operation unit, the control unit 7 performs the recording operation as follows:

The operations from the moment at which the image pickup device 2 is exposed to light to the moment at which image information is fetched by the.image memory 4 are the same as those to be performed in the ordinary recording mode. In the encoding process in this mode, fixed length coding of the amount of encoded data by means of the repetition process is not performed, but the encoding and recording are performed while fixing the value of F to a default value. That is, the control unit 7 supplies parameter F to the encode device 5 and as well as instructs the record device 6 to transmit code data. Furthermore, the control unit 7 instructs the record device 6 to receive the code data and to perform recording.

A relatively small value is selected as the value of the quantization parameter F at this time in order to prevent the image quality deterioration due to the compression (quantization).

As a result of the above-described operations, the variable length and compressed code is recorded to the record device. The recording process thus-arranged is continued in a period in which the release button is being depressed.

After the continuous photographing processes have been sequentially completed, all of code data items, which have been subjected to the variable length coding, are read out from the recording medium included in the record device 6. Then, the code data is decoded to pre-encoding image information by the encode device 5 before it is stored in the image memory 4.

Similarly to the encoding process, the above-described operations are controlled by the control unit 7. Information stored in the image memory 4 is compressed and recorded by the above-described ordinary process, that is, fixed length coding in which the repetition process is utilized.

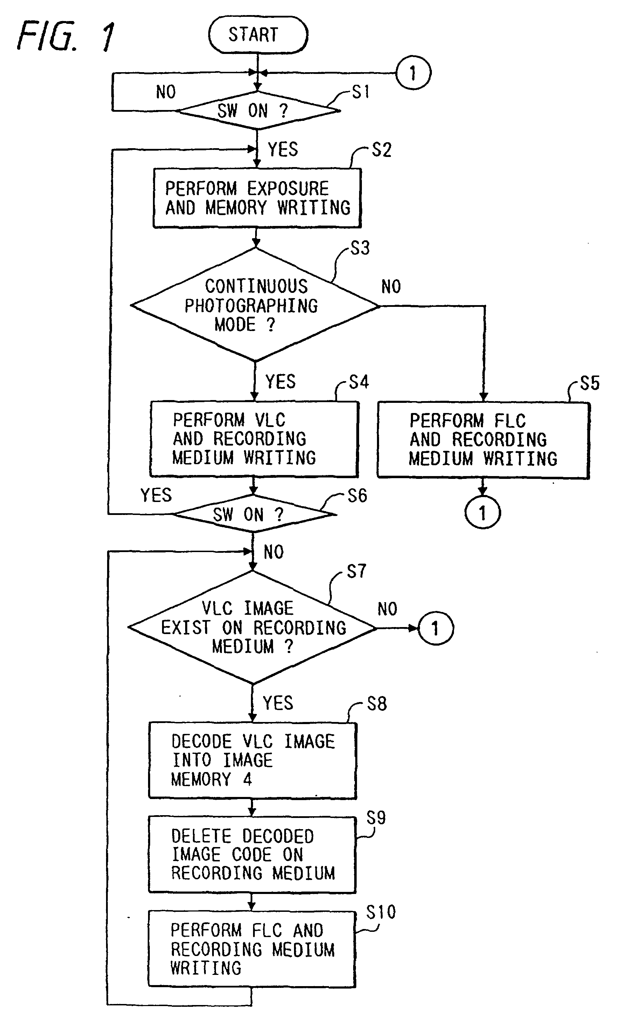

A schematic flow chart of the above-described embodiment is shown in Fig. 1.

Referring to Fig. 1, the fact that the release button is depressed is waited for in step S1. When it is depressed, exposure and memory writing are performed in step S2.

If it is, in step S3, determined that the continuous photographing mode has not been set, the FLC of image data on the image memory is performed and recording is performed in step S5.

If the continuous photographing mode has been set, the VLC of image data on the image memory is performed and recording is performed in step S4. If the release button is being depressed in step S6, the flow returns to step S2.

In a case where the release button is not depressed in step S6, that is, the continuous photographing has been completed, the flow proceeds to step S7 in which whether or not the image recorded by the VLC exists on the recording medium is examined. If it does not exist, the flow returns to the initial stage. If it exists, the flow proceeds to step S8 in which code data is read out from the recording medium before it is decoded so as to be stored in the image memory 4. In step S9, the code data decoded in step S8 and recorded on the image recording medium is deleted. In step S10, the image data in the image memory is subjected to the FLC before it is recorded. Then, the flow returns to step S7.

(Second Embodiment]

According to the above-described embodiment, in a case where an image, which has been subjected to the variable length coding process, exists, it is automatically searched and decoded to be again encoded by the FLC. The above-described operation may be commenced by a user by using a switch. That is, a structure may be employed which is arranged in such a manner that the flow is able to enter the sequence of step S7 when a user switches on a switch which enables the variable length code arrangement to be performed.

According to the above-described embodiment, the first compression means for performing the variable length compression and a second compression means for performing the fixed length compression use the common circuit. Furthermore, a distinction is made between the case where the quantization parameter is fixed and the case where the length is made to be variable so as to make it a fixed length by trial and error. In addition, predetermined parameters are set by the control unit 7 so that the first and the second compression means are provided with their functions. However, the compression means may possess individual circuit structures.

Furthermore, the compression means and the elongation means may be arranged in such a manner that they are formed into individual systems.

After recording has been completed by the above-described method, data may be displayed on a monitor by an image reproducing device having a means for decoding the code data or a hard copy of it may be obtained by a copying device.

The recording medium may be a magnetic disk or the like which employs the magnetic recording method, an optical disk or the like which employs the optical recording method, a semiconductor memory such as an IC card, a ROM and a RAM, or a recording medium capable of recording image data.

The compression algorithm is not limited to the above-described JPEG method. For example, the arithmetic encoding method, the run length encoding method, the Huffman encoding method and a facsimile encoding method such as the MH, MR and MMR may be employed. That is, any encoding method may be employed if it is a method which is capable of performing both of the fixed length compression and the variable length compression by changing the quantization parameter or the encoding parameter at the time of the encoding operation.

As described above, according to the embodiment, an image signal can efficiently be encoded. In particular, since recording can be performed at high speed while securing a satisfactorily large number of recording images, an image processing apparatus capable of performing compression encoding, which can be preferably adapted to, for example, the continuous photographing mode, can be provided.

[Third Embodiment]

According to this embodiment, there is provided a recording method utilizing the advantages of the two compression methods, that is, the above-described VLC and FLC and capable of recording a satisfactory number of images per recording medium while preventing the image quality deterioration.

According to this embodiment, an image is basically first recorded by the VLC. A sufficiently small value of F is selected in order to prevent the image quality deterioration. At a moment at which the total amount of encoded data of a plurality of images recorded by the VLC reaches a predetermined quantity, the images are decoded if the number of the images has not reached a number which must be realized with the above-described total amount of encoded data. Then, the image is again encoded by the FLC in order to make the total amount of encoded data to be smaller than the amount of encoded data which enables the number of the images to be recorded.

At this time, the amount of encoded data is not equally allocated to all of the images, but the amount of encoded data to be allocated is determined in proportion to the amount of encoded data at the time of the first encoding by the VLC. For example, it is considered that an image having a large amount of encoded data realized by the VLC has a large number of information items about the image. Therefore, the image is again encoded with a relatively large amount of encoded data.

According to the above-described recording method, the amount of encoded data can be allocated while arranging satisfactory balance for the contents of the subject image. Furthermore, a desired number of the recordable images on the recording medium can be reliably realized.

The above-described process will further specifically be described.

Prior to making the description, an assumption is made that a digital still camera having a magnetic disk as a recording medium the total recordable capacity of which is 2 Mbytes is used. Another assumption is made that 20 images can be recorded per magnetic disk, where the average allocated amount of encoded data per image is 100 Kbytes.

For example, in a case where a plurality of images are recorded by the VLC and 20 or more images can be recorded at the moment at which the total record capacity exceeds 1900 Kbytes, the number of images which must be recorded can be realized while maintaining the image quality. Therefore, there is no problem in this case. Therefore, an assumption is made that 19 or less images have been recorded. For example, a case in which 10 images have been recorded will be described. In this case, FLC is performed to again encode the image so as to make the total amount of encoded data for the 10 images to be 10 x 100 kbytes (= 1 Mbyte) .

An assumption is made that the amount of encoded data of each image at the time when they are encoded by the VLC is VLCvolume (i), where symbol i denotes the number of the image recorded.

The total amount of encoded data VLCsum for an image encoded by the VLC can be expressed by the following Equation (1):

$$\text{VLCsum} = \sum_{i=1}^{10} \text{VLCvolume (i)} \qquad\qquad ...(1)$$

An assumption is made that the amount of encoded data required to again encoding image i is FLCvolume (i), where FLCvolume (i) is given by allocating VLCsum by the ratio of VLCvolumne (i). FLCvolume (i) at this time can be given from the following Equation (2):

$$\text{FLCvolume (i)} = \frac{\text{VLCvolume (i)}}{\text{VLCsum}} \times 100 \text{ Kbytes} \times 10 \qquad\qquad (2)$$

Since VLCsum is necessarily larger than 100 Kbytes x 10, FLCvolumne (i) is, from Equation (2), necessarily smaller than VLCvolume (i). Therefore, by deleting data on the recording medium after the VLC code has been decoded, the decoded code can be re-encoded by the FLC and recorded to the recording medium.

When all of the 10 images have been again encoded by the FLC, the total amount of encoded data for 10 images is 1 Mbytes. Therefore, the blank capacity on the magnetic disk is 1 Mbyte. The image which has been subjected to the re-encoding process is not again subjected to the re-encoding. That is, the similar recording process is performed in such a manner that the 10 images can be recorded by using the residual 1 Mbyte. That is, the re-encoding is performed by the FLC in such a manner that the total amount of encoded data of the magnetic disk at the time when the i-th (i > 10) image is recorded by the VLC is larger than 1900 Kbytes as well as the total amount of encoded data for (i - 10) novel images recorded by the VLC when i is smaller than 19 is (i - 10) * 100 Kbytes.

The block structure of the image signal recording apparatus according to this embodiment is the same as that shown in Fig. 2.

Usually, the control unit 7 performs recording by the VLC in accordance with the following sequential order:

When the release button is depressed, the control unit 7 performs focusing and operates the diaphragm, the shutter and the like so as to expose the image pickup device 2 so that image information is fetched into the image memory 4. The control unit 7 transmits quantization parameter F to the encode device 5 as well as instructs the record device 6 to transmit code data. The control unit 7 further instructs the record device 6 to receive code data and to perform recording.

As a result, code data of a variable length can be recorded to the record device 6.

When the amount of encoded data of the image encoded by the VLC exceeds a predetermined value, all of the variable length code is read out by the record device 6 from the recording medium before being decoded into image information by the encode device 5 so as to be registered into the image memory 4. Similarly to the encoding operation, the above-described process is performed under control performed by the control unit 7. The amount of encoded data to be allocated to each image is calculated by the control unit 7 so that encoding and recording are performed by the FLC in such a manner that the amount of encoded data becomes the amount of encoded data thus-calculated.

The control unit 7 performs recording by the FLC.

The control unit 7 supplies parameter F to the encode device 5 so as to cause image data stored in the image memory 4 to be compressed. Furthermore, the code amount is counted. At this time, the encode device 5 does not transmit code data but the same counts the amount of encoded data for one frame.

The above-described operations are performed while changing F until a desired amount of encoded data can be obtained so that a plurality of trial-and-error operations are performed.

At the time when F (hereinafter designated by symbol "Fa"), which enables a desired amount of encoded data to be generated, is obtained, the control unit 7 again supplies the parameter Fa to the encode device 5 as well as instructs the record device 6 to transmit code data. The control unit 7 instructs the record device 6 to receive/record the code data.

The compressed code having a fixed-length for each image as a result of the above-described process is recorded on the recording medium of the record device 6.

The structure of the encoding device 5 is the same as that shown in Fig. 4.

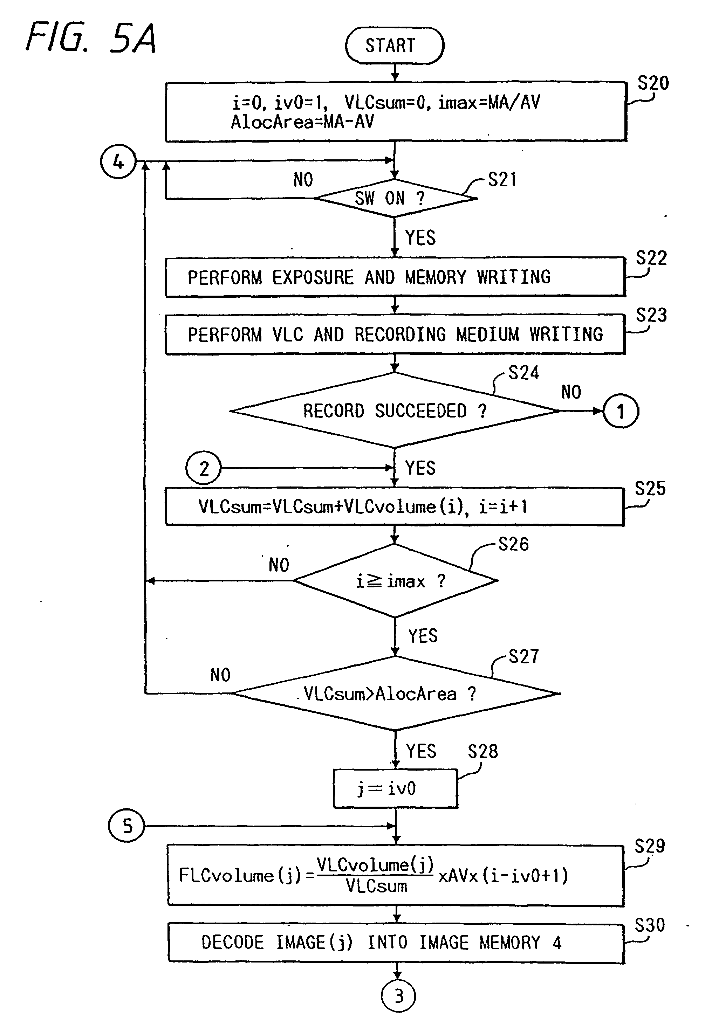

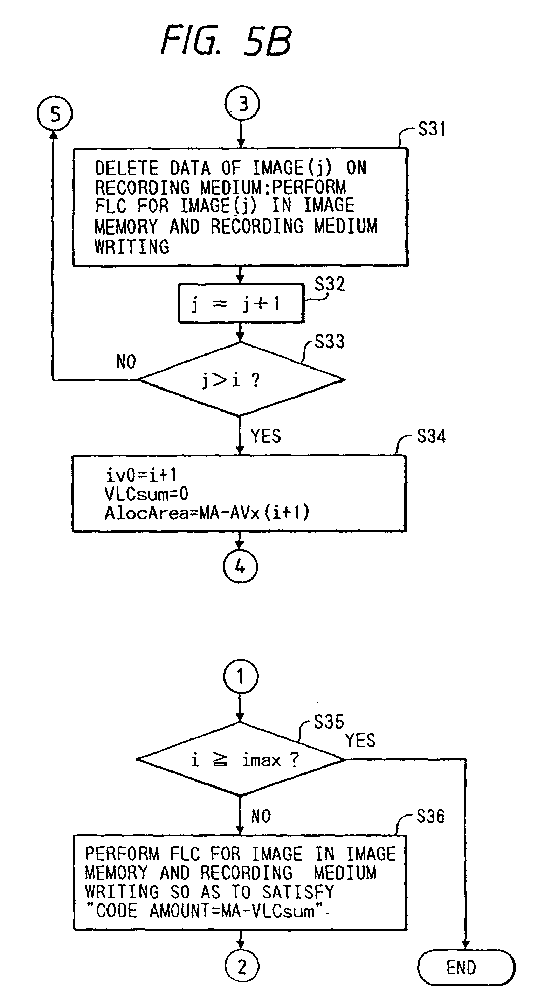

A specific flow chart of the above-described embodiment is shown in Figs. 5A and 5B. Referring to Figs. 5A and 5B, symbols i, j, iv0, VLCsum, VLCvolume ( ), FLCvolume ( ) and AlocArea are variables and imax, MA and AV are constants. Symbol i denotes the number of the image given in accordance with the photographing order and symbol iv0 denotes the first number of the image recorded by the VLC. Symbol VLCsum denotes the total amount of encoded data of the images which have been recorded by the VLC and the code length of which has not been adjusted. Symbol VLCvolume (i) denotes the code length of the i-th image realized due to the VLC, arrangement FLCvolume (i) denotes a desired code length for use to adjust the amount of encoded data of the i-th image and AlocArea denotes a blank capacity for temporarily recording a plurality of images to be recorded on the recording medium by the VLC. Symbol AV denotes an average allocated length per image. Therefore, the number imax of the recordable images per recording medium can be given by MA/AV.

In step S20, the variable is initialized. That is, assumptions are made that i = 0, iv0 = 1 and VLCsum = 0. AlocArea is obtained by subtracting average data amount AV from total recordable capacity MA. That is, a marginal capacity of about one image is provided. The number imax of the recordable images per recording medium is obtained by dividing total recordable capacity MA by average data amount AV.

In step S21, a fact that the release button is depressed is waited for. When the release button is depressed, exposure is performed and writing to the image memory 4 are performed in step S22.

In step S23, image in the image memory 4 is formed into a VLC code before it is written to the recording medium. The recorded amount of encoded data at this time is stored in VLCvolume (i) .

In step S24, it is determined whether or not all of code data items could be recorded on the recording medium. If all of the code data items could be recorded as described above, the flow proceeds to step S25. The case where the same could not be recorded is an exceptional case where the amount exceeds the blank capacity the size of which is average data amount and which exists on the recording medium. In this case, the number of images recorded and a predetermined number of images are subjected to a comparison in step S35. If the number of the recorded images exceeds the predetermined number, recording on the above-described recording medium is completed here. If the number of the recorded images has not reached the predetermined number, the flow proceeds to step S36 in which FLC recording in a blank region on the recording medium is performed. The recorded amount of encoded data at this time is stored in VLCvolume (i) before the flow proceeds to step S25.

In step S25, i and VLCsum are updated in such a manner that i = i + 1, VLCsum = VLCsum + VLCvolume (i).

In step S26, whether or not $i \geqq imax$, where imax is the predetermined number of images, is determined. If the predetermined number of image has not been recorded, there is no necessity of adjusting the amount of encoded data. Therefore, the flow returns to step S21 in which the fact that the release button is depressed is waited for. If the predetermined number of images has been recorded ($i \geqq imax$), the flow proceeds to step S27.

In step S27, it is discriminated whether or not VLCsum exceeds allocated capacity AlocArea for the variable length code. If it does not exceed, the flow returns to step S21. If it exceeds AlocArea, the flow process to step S28.

In a loop defined by steps S28 to S32, images iv0 to i are re-encoded for the purpose of adjusting the amount of encoded data.

In step S29, the amount of encoded data to be allocated to image j is obtained by the following equation:

$$FLCvolume~(j) = \frac{VLCvolume(j)}{VLCsum} * AverageVolume*(i - iv0 + 1) \qquad (3)$$

According to Equation (3), the amount of encoded data in proportion to VLCvolume ( ) is allocated similarly to Equation (2). Referring to Equation (3), term (i - iv0 + 1) denotes the number of images which have not been subjected to the adjustment of the amount of encoded data. Therefore, by multiplying AverageValue, the total amount of encoded data to be allocated to (j - iv0 + 1) images can be expressed.

In step S30, image j is decoded in the image memory.

In step S31, codes on the medium are deleted before FLC recording of images in the image memory is performed.

Since re-encoding of the (i - iv0 + 1) images has been completed in a loop defined by steps S28 to S32, variables iv0, VLCsum and AlocArea are updated in step S34. Then, the flow returns to step S21.

[Fourth Embodiment]

According to the above-described embodiments, the amount of encoded data is allocated by the amount of encoded data in proportion to the degree of VLCvolume (i). The present invention is not limited to this. For example, a structure may be employed which is arranged in such a manner that an image the degree of VLCvolume (i) of which is smaller than AverageValue is not re-encoded. In this case, the images except for the above-described image are re-encoded so as to adjust the amount of encoded data. It might be feasible to employ another structure which is arranged in such a manner that images having VLCvolume (i), which is larger than a certain amount x of encoded data, are assumed that they have a amount of encoded data of x and a proportional allocation is performed. The above-described idea utilizes a fact that a complex image exceeding a certain degree does not encounter an excessive deterioration even if it is compressed.

Although the apparatus automatically enters the re-encoding sequence according to the above-described embodiments, another structure may be employed which is arranged in such a manner that an alarm for a user is displayed if VLCsum > AlocArea in step S27 so as to cause the user to adjust the amount of encoded data or change the recording medium because the capacity is too small. Furthermore, if the user instructs the adjustment of the amount of encoded data to be performed, the flow proceeds to the sequence ensuing the step S28.

Although the above-described embodiments are arranged in such a manner that the amount of encoded data is adjusted when the amount of variable length encoded data becomes a predetermined quantity, another structure may be employed which is arranged in such a manner that the amount of encoded data is adjusted when the number of images encoded by VLC becomes a predetermined number. For example, the amount of encoded data may be adjusted by re-encoding in units of 5 images performed for each 5 images.

Any of the above-described cases is arranged in such a manner that, in a case where the amount of encoded data is automatically adjusted, the continuous photographing operation is stopped if the adjustment of the amount of encoded data is commenced during the continuous photographing operation. Therefore, another structure may be employed which is arranged in such a manner that the adjustment of the amount of encoded data is not commenced during the continuous photographing but the same is adjusted after the continuous photographing operation has been completed.

According to the above-described embodiment, the first compression means for performing the variable length compression and a second compression means for performing the fixed length compression use the common circuit. Furthermore, a distinction is made between the case where the quantization parameter is fixed and the case where the length is made to be variable so as to make it a fixed length by trial and error. In addition, predetermined parameters are set by the control unit 7 so that the first and the second compression means are provided with their functions. However, the compression means may possess individual circuit structures.

Furthermore, the compression means and the elongation means may be arranged in such a manner that they are formed into individual systems.

After recording has been completed by the above-described method, data may be displayed on a monitor by an image reproducing device having a means for decoding the code data or a hard copy of it may be obtained by a copying device.

The recording medium may be a magnetic disk or the like which employs the magnetic recording method, an optical disk or the like which employs the optical recording method, a semiconductor memory such as an IC card, a ROM and a RAM, or a recording medium capable of recording image data.

The compression algorithm is not limited to the above-described JPEG method. For example, the arithmetic encoding method, the run length encoding method, the Huffman encoding method and a facscimile encoding method such as the MH, MR and MMR may be employed. That is, any encoding method may be employed if it is a method which is capable of performing both of the fixed length compression and the variable length compression by changing the quantization parameter or the encoding parameter at the time of the encoding operation.

As described above, according to the above-described embodiments of the present invention, the amount of encoded data can be allocated to adapt to the image while enabling a predetermined number of images to be recorded. Therefore, excessive deterioration in the image quality can be prevented. Furthermore, since the VLC is performed in usual, the compression speed can be raised in comparison to the FLC. Therefore, an effect can be obtained in that a larger number of images can be photographed in the continuous photographing mode of the camera.

According to the embodiments, the deterioration in the image quality can be prevented and thereby the image can be compressed efficiently.

[Fifth Embodiment]

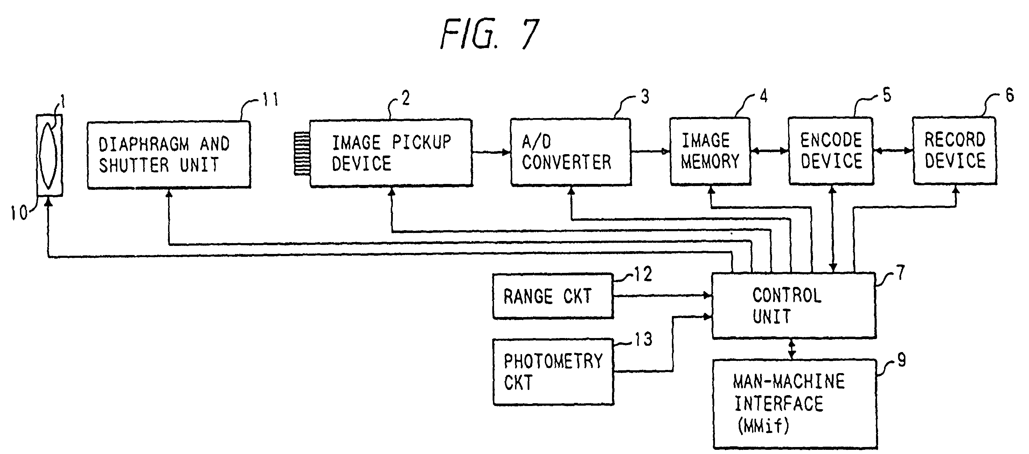

Fig. 7 is a block diagram which illustrates the structure of a fifth embodiment of the present invention.

The blocks having the same functions as those shown in Fig. 2 are given the same reference numerals. Referring to Fig. 7, reference numeral 10 represents an actuator unit for moving a lens 1 in a focusing direction in response to a focus control signal transmitted from the control unit 7. Reference numeral 11 represents a diaphragm and shutter unit for controlling the diaphragm and the shutter speed in accordance with a diaphragm value and the shutter speed transmitted from the control unit 7. Reference numeral 12 represents a range circuit for measuring the distance between the lens 1 and a subject (omitted from illustration). Reference numeral 13 represents a photometry circuit for measuring the brightness of the subject (omitted from illustration).

The control unit 7 generates the focus control signal in accordance with the distance measured by the range circuit 13, the control unit 7 further generating a signal denoting the diaphragm value and the shutter speed in accordance with the brightness measured by the photometry circuit 13.

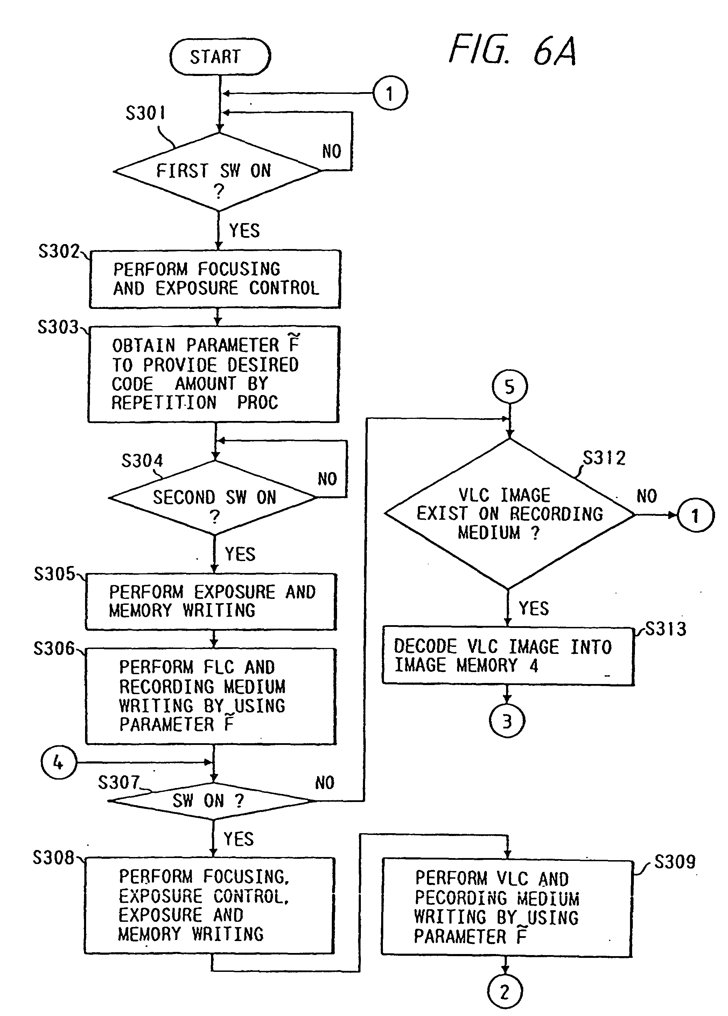

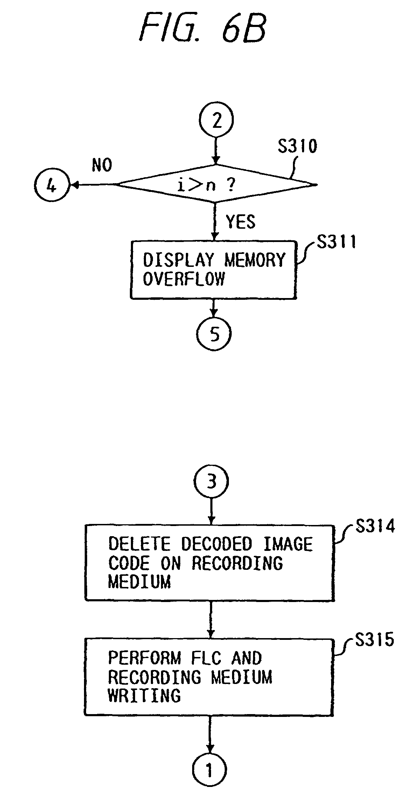

Then, the control operation performed by the control unit 7 will now be described with reference to flow charts shown in Figs. 6A and 6B.

In step S301, when the release button is depressed half, a discrimination is made that the first switch is switched on. Accordingly, the flow proceeds to step S302. A state of waiting is realized until the release button is depressed half. In step S302, the control unit 7 performs the focus control and the exposure control such as the diaphragm and the shutter speed controls in accordance with data supplied from the range circuit 12 and the photometry circuit 13.

In step S303, parameter $\tilde{F}$ for the quantization is obtained under conditions the focusing position, the diaphragm and the shutter speed set in accordance with the subject. That is, the parameter $\tilde{F}$ is obtained such that a desired code quantity is realized by the above-described repetition process.

In step S304, when the release button is fully depressed, a discrimination is made that the second switch is switched on so that the flow proceeds to step S305. The waiting state is realized until the release button is fully depressed.

In step S305, exposure to a CCD is performed so that image data is written to the image memory 4.

In step S306, the encode device 5 performs the FLC (Fixed Length Coding) by using parameter F obtained in step S303 so as to write code data to the recording medium of the record device 6.

In step S307, it is determined whether or not the release button is continuously being depressed. If the release button is being depressed, a discrimination is made that the present mode is the continuous photographing mode. Therefore, the flow proceeds to step S308.

In step S308, focusing and exposure controlling for the next image are performed and as well as the CCD is exposed to light so that image data is written to the image memory 4.

In step S309, image data stored in the image memory 4 is encoded by using parameter $\tilde{F}$ obtained in step S303. In a case where the image has been changed from the previous image, it is considered that the code data quantity will be changed if the same parameter $\tilde{F}$ as that for the previous image is used. Accordingly, VLC (Variable Length Coding) is basically performed in step S309.

In step S310, it is discriminated whether or not the number of images to be continuously photographed is larger than number n of the images, which can be stored in the image memory 4 and the record device 6. If it is larger than n, the flow proceeds to step S311 in which a fact of memory overflow is displayed on a display of an MMif9 before the flow proceeds to step S312. In a case where i $\leqq$ n, the flow proceeds to step S307 so as to continue the continuous photographing operation.

If the release button has not been depressed in step S307, the flow proceeds to step S312 in which a discrimination is made whether or not the VLC image exists on the recording medium. If it does not exist, the flow returns to step S301. If it exists as described above, the VLC image is decoded in step S313, the decoded image data being then stored in the image memory 4. In step S314, code data on the recording medium, which has been decoded in step S314, is deleted. In step S315, the FLC is performed so that code data is written to the recording medium. The above-described operation is the same as that performed according to the first embodiment.

As described above, according to this embodiment, the continuous photographing operation is performed in such a manner that the coding of the variable length is performed by making the quantization parameter for the second and ensuing images to be the same as that for the first image. Therefore, the process of determining the parameter can be omitted so that high speed continuous-photographing can be performed.

Furthermore, the quantization parameter is determined after the focus control and the exposure control have been performed. Therefore, a parameter which is suitable for the actual subject can be determined.

In addition, the VLC image is converted into the FLC image after the number of images have been continuously photographed. Therefore, the quantity of code data to be recorded on the recording medium can easily be controlled.

Although the description of the above-described embodiment is made with reference to an electronic still camera, a similar control can be performed in the other type apparatus.

For example, in a case where image data is subjected to the variable length encoding and the same is again decoded and printed after the same has been temporarily stored in a memory, the quantization parameter may be obtained after processing conditions such as the exposure quantity and the like have been determined by pre-scanning.

In the above-described embodiment, FLC (Fixed Length Coding) is used which is precisely controlled to a predetermined code quantity. However, a predetermined quantity of error is permitted.

**Claims**

1. An image processing apparatus for encoding image data to generate compressed image data for storage, comprising:

   first coding means (5) for coding input image data defining one picture into code data having a variable length; and
   means for writing code data to memory;

   **characterised in that**:

   the first coding means (5) is arranged to perform a process of coding the input image data defining one picture into code data having a variable length using a first quantisation parameter value; and
   the apparatus further comprises second coding means (5) for decoding the code data coded by said first coding means into decoded data and for encoding the decoded data into code data having a predetermined length less than the length of the code data generated by the first coding means using a quantisation parameter value different from the first quantisation parameter value.

2. An image processing apparatus according to claim 1, further comprising counting means (7) for counting the amount of code data coded by said first coding means (5), and wherein the second coding means (5) is arranged to decode the code data coded by the first coding means (5) and to encode the decoded data when the count value provided by the counting means reaches a predetermined value.

3. An image processing apparatus according to any preceding claim, wherein each of said first coding means (5) and said second coding means (5) comprises orthogonal transform conversion means (51).

4. An image processing apparatus according to claim 3, wherein each of said first and second coding means comprises entropy coding means (53).

5. An image processing apparatus according to claim 4, wherein said first and second coding means share the same orthogonal transform conversion means (51), quantisation means (52) and entropy coding means (53).

6. An image processing apparatus according to any preceding claim, wherein the quantisation parameter value of the first coding means (5) is fixed to a predetermined value.

7. An image processing apparatus according to any preceding claim, wherein the second coding means (5) is operable to encode the decoded data repetitively using a different quantisation parameter value each time.

8. An image processing apparatus according to any preceding claim, further comprising means (7) for determining the length for the code data to be generated by the second coding means (5) for the one picture in dependence upon the length of the code data generated by the first coding means (5) for the one picture.

9. A digital camera comprising an image processing apparatus according to any one of the preceding claims.

10. A camera according to claim 9, wherein each of said first and second coding means (5) is arranged to operate when the camera is operated in a continuous photographing mode.

11. An image processing method for encoding image data to generate compressed image data for storage, comprising:

   a first coding step of coding input image data defining one picture into code data having a variable length; and
   a step of writing code data to memory;

   **characterised in that**:

   in the first coding step, a process of coding the input image data defining one picture into code data having a variable length is performed using a first quantisation parameter value; and
   the method further comprises a second coding step of decoding the code data coded in the first coding step into decoded data and encoding the decoded data into code data having a predetermined length less than the length of the code data generated in the first coding step using a quantisation parameter value different from the first quantisation parameter value.

12. An image processing method according to claim 11, further comprising a step of counting the amount of code data coded in said first coding step, and wherein, in the second coding step, the code data coded in the first coding step is decoded and the decoded data is encoded when the count value reaches a predetermined value.

13. An image processing method according to claim 11 or claim 12, wherein, in each of said first and second coding steps, the encoding includes an orthogonal transform conversion of the data.

14. An image processing method according to claim 13, wherein, in each of said first and second coding steps, the encoding includes entropy coding of the data.

15. An image processing method according to any of claims 11 to 14, wherein the quantisation parameter value used in the first coding step is fixed to a predetermined value.

16. An image processing method according to any of claims 11 to 15, wherein, in the second coding step, the decoded data is repetitively encoded using a different quantisation parameter value each time.

17. An image processing method according to any of claims 11 to 16, further comprising a step of determining the length for the code data to be generated in the second coding step for the one picture in dependence upon the length of the code data generated in the first coding step for the one picture.

18. A method according to any of claims 11 to 17, wherein the method is performed in a digital camera when the camera is operated in a continuous photographing mode.

**Patentansprüche**

1. Bildverarbeitungsvorrichtung zum Codieren von Bilddaten, um komprimierte Bilddaten zur Speicherung zu erzeugen, mit
   einer ersten Codiereinrichtung (5) zum Codieren von eine Abbildung definierenden Eingabebilddaten in Codedaten, die eine variable Länge aufweisen; und
   einer Einrichtung zum Schreiben von Codedaten in einen Speicher;
   **dadurch gekennzeichnet, dass**
   die erste Codiereinrichtung (5) dahingehend ausgestaltet ist, um einen Prozess des Codierens der eine Abbildung definierenden Eingabebilddaten in Codedaten, die eine variable Länge aufweisen, unter Verwendung eines ersten Quantisierungsparameterwerts durchführt; und
   die Vorrichtung zudem eine zweite Codiereinrichtung (5) zum Decodieren der von der ersten Codiereinrichtung codierten Codedaten in decodierte Daten und zum Codieren der decodierten Daten in Codedaten umfasst, die eine vorbestimmte Länge aufweisen, die geringer als die Länge der von der ersten Codiereinrichtung erzeugten Codedaten ist, unter Verwendung eines von dem ersten Quantisierungsparameterwert verschiedenen Quantisierungsparameterwerts.

2. Bildverarbeitungsvorrichtung nach Anspruch 1, zudem mit einer Zähleinrichtung (7) zum Zählen der Menge von von der ersten Codiereinrichtung (5) codierten Codedaten, und wobei die zweite Codiereinrichtung (5) dahingehend ausgestaltet ist, um die von der ersten Codiereinrichtung (5) codierten Codedaten zu decodieren und die decodierten Daten zu codieren, wenn der von der Zähleinrichtung zur Verfügung gestellte Zählwert einen vorbestimmten Wert erreicht.

3. Bildverarbeitungsvorrichtung nach einem der vorangehenden Ansprüche, wobei jede der ersten Codiereinrichtung (5) und der zweiten Codiereinrichtung (5) eine orthogonale Transformationswandlungseinrichtung (51) aufweist.

4. Bildverarbeitungsvorrichtung nach Anspruch 3, wobei jede der ersten und der zweiten Codiereinrichtung (5) eine Entropiecodiereinrichtung (53) aufweist.

5. Bildverarbeitungsvorrichtung nach Anspruch 4, wobei die erste und die zweite Codiereinrichtung die selbe orthogonale Transformationswandlungseinrichtung (51), Quantisierungseinrichtung (52) und Entropiecodiereinrichtung (53) teilen.

6. Bildverarbeitungsvorrichtung nach einem der vorangehenden Ansprüche, wobei der Quantisierungsparameterwert der ersten Codiereinrichtung (5) auf einen vorbestimmten Wert festgelegt ist.

7. Bildverarbeitungsvorrichtung nach einem der vorangehenden Ansprüche, wobei die zweite Codiereinrichtung betreibbar ist, um die decodierten Daten unter wiederholter Verwendung eines jedes Mal verschiedenen Quantisierparameterwerts zu codieren.

8. Bildverarbeitungsvorrichtung nach einem der vorangehenden Ansprüche, zudem mit einer Einrichtung (7) zum Bestimmen der Länge für die von der zweiten Codiereinrichtung (5) für die eine Abbildung zu erzeugenden Codedaten in Abhängigkeit von der Länge der von der ersten Codiereinrichtung (5) für die eine Abbildung zu erzeugenden Codedaten.

9. Digitale Kamera mit einer Bildverarbeitungsvorrichtung nach einem der vorangehenden Ansprüche.

10. Kamera nach Anspruch 9, wobei jede der ersten und der zweiten Codiereinrichtung (5) dahingehend ausgestaltet ist, um einen Betrieb auszuführen, wenn die Kamera in einer kontinuierlichen Photographierbetriebsart betrieben wird.

11. Bildverarbeitungsverfahren des Codierens von Bilddaten, um komprimierte Bilddaten zur Speicherung zu erzeugen, mit

einem ersten Codierschritt des Codierens von eine Abbildung definierenden Eingabebilddaten in Codedaten, die eine variable Länge aufweisen; und

einem Schritt des Schreibens von Codedaten in einen Speicher;

**dadurch gekennzeichnet, dass**

bei dem ersten Codierschritt ein Prozess des Codierens der eine Abbildung definierenden Eingabebilddaten in Codedaten, die eine variable Länge aufweisen, unter Verwendung eines ersten Quantisierungsparameterwerts durchgeführt wird; und

das Verfahren zudem einen zweiten Codierschritt des Decodierens der bei dem ersten Codierschritt codierten Codedaten in decodierte Daten und des Codierens der decodierten Daten in Codedaten umfasst, die eine vorbestimmte Länge aufweisen, die geringer als die Länge der bei dem ersten Codierschritt erzeugten Codedaten ist, unter Verwendung eines von dem ersten Quantisierungsparameterwert verschiedenen Quantisierungsparameterwerts.

12. Bildverarbeitungsverfahren nach Anspruch 11, zudem mit einem Schritt des Zählens der Menge von bei dem ersten Codierschritt codierten Codedaten, und wobei, bei dem zweiten Codierschritt, die bei dem ersten Codierschritt codierten Codedaten decodiert werden und die decodierten Daten codiert werden, wenn der Zählwert einen vorbestimmten Wert erreicht.

13. Bildverarbeitungsverfahren nach Anspruch 11 oder 12, wobei das Codieren bei jedem des ersten und des zweiten Codierschritts eine orthogonale Transformationswandlung der Daten aufweist.

14. Bildverarbeitungsverfahren nach Anspruch 13, wobei das Codieren bei jedem des ersten und des zweiten Codierschritts ein Entropiecodieren der Daten aufweist.

15. Bildverarbeitungsverfahren nach einem der Ansprüche 11 bis 14, wobei der bei dem ersten Codierschritt verwendete Quantisierungsparameterwert auf einen vorbestimmten Wert festgelegt ist.

16. Bildverarbeitungsverfahren nach einem der Ansprüche 11 bis 15, wobei, bei dem zweiten Codierschritt, die decodierten Daten unter Verwendung eines jedes Mal verschiedenen Quantisierparameterwerts wiederholt codiert werden.

17. Bildverarbeitungsverfahren nach einem der Ansprüche 11 bis 16, zudem mit einem Schritt des Bestimmens der Länge für die bei dem zweiten Codierschritt für die eine Abbildung zu erzeugenden Codedaten in Abhängigkeit von der Länge der bei dem ersten Codierschritt für die eine Abbildung zu erzeugenden Codedaten.

18. Verfahren nach einem der Ansprüche 11 bis 17, wobei das Verfahren in einer digitalen Kamera durchgeführt wird,

**EP 0 926 883 B1**

wenn die Kamera in einer kontinuierlichen Photographierbetriebsart betrieben wird.

## Revendications

1. Appareil de traitement d'image destiné à coder des données d'image pour générer des données d'image comprimées pour le stockage, comportant :

   un premier moyen de codage (5) destiné à coder des données d'image d'entrée définissant une première image en données de code ayant une longueur variable ; et
   un moyen destiné à écrire des données de code en mémoire ;

   **caractérisé en ce que** :

   le premier moyen de codage (5) est agencé de façon à exécuter un processus de codage des données d'image d'entrée définissant une image en données de code ayant une longueur variable en utilisant une première valeur de paramètre de quantification ; et
   l'appareil comporte en outre un second moyen de codage (5) destiné à décoder les données de code codées par ledit premier moyen de codage en données décodées et à coder les données décodées en données de code ayant une longueur prédéterminée inférieure à la longueur des données de code générées par le premier moyen de codage en utilisant une valeur de paramètre de quantification différente de la première valeur de paramètre de quantification.

2. Appareil de traitement d'image selon la revendication 1, comportant en outre un moyen de comptage (7) destiné à compter la quantité de données de code codées par ledit premier moyen de codage (5), et dans lequel le second moyen de codage (5) est agencé de façon à décoder les données de code codées par le premier moyen de codage (5) et à coder les données décodées lorsque la valeur de comptage produite par le moyen de comptage atteint une valeur prédéterminée.

3. Appareil de traitement d'image selon l'une quelconque des revendications précédentes, dans lequel chacun dudit premier moyen de codage (5) et dudit second moyen de codage (5) comporte un moyen de conversion (51) à transformation orthogonale.

4. Appareil de traitement d'image selon la revendication 3, dans lequel chacun desdits premier et second moyens de codage comprend un moyen (53) de codage d'entropie.

5. Appareil de traitement d'image selon la revendication 4, dans lequel lesdits premier et second moyens de codage se partagent le même moyen (51) de conversion à transformation orthogonale, le même moyen (52) de quantification et le même moyen (53) de codage d'entropie.

6. Appareil de traitement d'image selon l'une quelconque des revendications précédentes, dans lequel la valeur de paramètre de quantification du premier moyen de codage (5) est fixée à une valeur prédéterminée.

7. Appareil de traitement d'image selon l'une quelconque des revendications précédentes, dans lequel le second moyen de codage (5) peut fonctionner de façon à coder de manière répétitive les données décodées en utilisant à chaque fois une valeur de paramètre de quantification différente.

8. Appareil de traitement d'image selon l'une quelconque des revendications précédentes, comportant en outre un moyen (7) destiné à déterminer la longueur pour les données de code devant être générées par le second moyen de codage (5) pour la première image en fonction de la longueur des données de code générées par le premier moyen de codage (5) pour la première image.

9. Caméra numérique comportant un appareil de traitement d'image selon l'une quelconque des revendications précédentes.

10. Caméra selon la revendication 9, dans laquelle chacun desdits premier et second moyens de codage (5) est agencé de façon à fonctionner lorsque la caméra est mise en oeuvre dans un mode de prise de vue en continu.

**11.** Procédé de traitement d'image pour le codage de données d'image afin de générer des données d'image comprimées pour un stockage, comprenant :

une première étape de codage consistant à coder des données d'image d'entrée définissant une première image en données de code ayant une longueur variable ; et
une étape d'écriture de données de code en mémoire ;

**caractérisé en ce que** :

dans la première étape de codage, un processus de codage des données d'image d'entrée définissant une première image en données de code ayant une longueur variable est exécuté en utilisant une première valeur d'un paramètre de quantification ; et
le procédé comprend en outre une seconde étape de codage consistant à décoder les données de code codées dans la première étape de codage en données décodées et à coder les données décodées en données de code ayant une longueur prédéterminée inférieure à la longueur des données de code générées dans la première étape de codage en utilisant une valeur de paramètre de quantification différente de la première valeur de paramètre de quantification.

**12.** Procédé de traitement d'image selon la revendication 11, comprenant en outre une étape de comptage de la quantité de données de code codées dans ladite première étape de codage, et dans lequel, dans la seconde étape de codage, les données de code codées dans la première étape de codage sont décodées et les données décodées sont codées lorsque la valeur de comptage atteint une valeur prédéterminée.

**13.** Procédé de traitement d'image selon la revendication 11 ou la revendication 12, dans lequel, dans chacune desdites première et seconde étapes de codage, le codage comprend une conversion à transformation orthogonale des données.

**14.** Procédé de traitement d'image selon la revendication 13, dans lequel, dans chacune desdites première et seconde étapes de codage, le codage comprend un codage d'entropie des données.

**15.** Procédé de traitement d'image selon l'une quelconque des revendications 11 à 14, dans lequel la valeur de paramètre de quantification utilisée dans la première étape de codage est fixée à une valeur prédéterminée.

**16.** Procédé de traitement d'image selon l'une quelconque des revendications 11 à 15, dans lequel, dans la seconde étape de codage, les données décodées sont codées de façon répétitives en utilisant à chaque fois une valeur de paramètre de quantification différente.

**17.** Procédé de traitement d'image selon l'une quelconque des revendications 11 à 16, comprenant en outre une étape de détermination de la longueur pour les données de code devant être générées dans la seconde étape de codage pour la première image en fonction de la longueur des données de code générées dans la première étape de codage pour la première image.

**18.** Procédé selon l'une quelconque des revendications 11 à 17, dans lequel le procédé est exécuté dans une caméra numérique lorsque la caméra est mise en oeuvre dans un mode de prise de vue en continu.

*FIG. 1*

```
                    ( START )                          (1)

        NO      ┌──────────────┐  ~S1
        ───────<   SW ON ?     >
                └──────────────┘
                      │ YES        ~S2
              ┌────────────────────┐
              │ PERFORM EXPOSURE   │
              │ AND MEMORY WRITING │
              └────────────────────┘
                      │              ~S3
              ┌────────────────────┐
              │    CONTINUOUS      │   NO
             <   PHOTOGRAPHING      >──────────┐
              │     MODE ?         │           │
              └────────────────────┘           │
                      │ YES    ~S4             │ ~S5
          ┌────────────────────┐   ┌────────────────────┐
          │ PERFORM VLC        │   │ PERFORM FLC        │
          │ AND RECORDING      │   │ AND RECORDING      │
          │ MEDIUM WRITING     │   │ MEDIUM WRITING     │
          └────────────────────┘   └────────────────────┘
      YES     │              ~S6            │
        ─────<    SW ON ?     >            (1)
              └──────────────┘
                      │ NO            ~S7
              ┌────────────────────┐
              │   VLC IMAGE        │   NO
             <  EXIST ON RECORDING  >──────── (1)
              │    MEDIUM ?        │
              └────────────────────┘
                      │ YES     ~S8
              ┌────────────────────┐
              │ DECODE VLC IMAGE   │
              │ INTO IMAGE         │
              │ MEMORY 4           │
              └────────────────────┘
                      │              ~S9
              ┌────────────────────┐
              │ DELETE DECODED     │
              │ IMAGE CODE ON      │
              │ RECORDING MEDIUM   │
              └────────────────────┘
                      │              ~S10
              ┌────────────────────┐
              │ PERFORM FLC AND    │
              │ RECORDING MEDIUM   │
              │ WRITING            │
              └────────────────────┘
```

## FIG. 2

IMAGE PICKUP DEVICE `2` → A/D CONVERTER `3` → IMAGE MEMORY `4` ↔ ENCODE DEVICE `5` ↔ RECORD DEVICE `6`

CONTROL UNIT `7`

MAN-MACHINE INTERFACE (MMif) `9`

EP 0 926 883 B1

# FIG. 3A

# FIG. 3B

## FIG. 4

IMAGE
MEMORY 4

DCT
/IDCT
UNIT
51

QUANTIZATION
/INVERSE
QUANTIZATION UNIT
52

HUFFMAN ENCODE
/DECODE
UNIT
53

CONTROL
UNIT 7

RECORD
UNIT 6

COUNTER
57

×
58

PARAMETER SETTING
REGISTER
54

QUANTIZATION
TABLE
55

HUFFMAN
TABLE
56

CONTROL
UNIT 7

EP 0 926 883 B1

18

*FIG. 5A*

START

i=0, iv0=1, VLCsum=0, imax=MA/AV
AlocArea=MA-AV                                    S20

④

SW ON ?    NO →                                  S21

YES

PERFORM EXPOSURE AND MEMORY WRITING              S22

PERFORM VLC AND RECORDING MEDIUM WRITING         S23

RECORD SUCCEEDED ?    NO → ①                     S24

② → YES

VLCsum=VLCsum+VLCvolume(i), i=i+1                 S25

NO ←    i ≧ imax ?                               S26

YES

NO ←    VLCsum>AlocArea ?                         S27

YES

j = iv0                                          S28

⑤ →

$$FLCvolume(j) = \frac{VLCvolume(j)}{VLCsum} \times AV \times (i-iv0+1)$$    S29

DECODE IMAGE(j) INTO IMAGE MEMORY 4              S30

③

# FIG. 5B

(5)  (3)  ⌐S31

┌─────────────────────────────────┐
│ DELETE DATA OF IMAGE(j) ON       │
│ RECORDING MEDIUM:PERFORM         │
│ FLC FOR IMAGE(j) IN IMAGE        │
│ MEMORY AND RECORDING MEDIUM      │
│ WRITING                          │
└─────────────────────────────────┘

┌──────────────┐ ⌐S32
│  j = j+1     │
└──────────────┘

⌐S33

NO ◇ j > i ?

YES  ⌐S34

┌─────────────────────────────────┐
│  iv0=i+1                         │
│  VLCsum=0                        │
│  AlocArea=MA-AVx(i+1)            │
└─────────────────────────────────┘

(4)

(1)

⌐S35
◇ i ≧ imax ?  YES

NO  ⌐S36

┌─────────────────────────────────┐
│ PERFORM FLC FOR IMAGE IN IMAGE   │
│ MEMORY AND RECORDING  MEDIUM     │
│ WRITING SO AS TO SATISFY         │
│ "CODE AMOUNT=MA-VLCsum".         │
└─────────────────────────────────┘

(2)  ( END )

*FIG. 6A*

EP 0 926 883 B1

# FIG. 6B

② → S310

NO ← i>n ?

YES

DISPLAY MEMORY OVERFLOW ⟋S311

⑤

③

DELETE DECODED IMAGE CODE ON RECORDING MEDIUM ⟋S314

PERFORM FLC AND RECORDING MEDIUM WRITING ⟋S315

①

22

## FIG. 7

EP 0 926 883 B1